## Europäisches Patentamt
## European Patent Office
## Office européen des brevets

(11) Veröffentlichungsnummer: **0 012 250**
**A1**

# EUROPÄISCHE PATENTANMELDUNG

(21) Anmeldenummer: **79104624.6**

(22) Anmeldetag: **21.11.79**

(51) Int. Cl.³: **E 05 F 11/50, E 05 F 15/16**

(30) Priorität: **14.12.78 DE 2853947**

(43) Veröffentlichungstag der Anmeldung: **25.06.80**
**Patentblatt 80/13**

(84) Benannte Vertragsstaaten: **DE FR GB IT SE**

(71) Anmelder: **ROBERT BOSCH GMBH, Postfach 50, D-7000 Stuttgart 1 (DE)**

(72) Erfinder: **Fahrner, Fritz, Eschenweg 2, D-7601 Legelshurst (DE)**

(54) **Antriebsvorrichtung zum Verstellen von Fensterscheiben, Schiebedächern und dergleichen von Kraftfahrzeugen.**

(57) Es wird eine Antriebsvorrichtung vorgeschlagen, die zum Verstellen von Fensterscheiben, Schiebedächern und dergleichen von Kraftfahrzeugen dient. Die Antriebsvorrichtung umfaßt einen Antriebsmotor mit einer Abtriebswelle, welche die Schneckenwelle (10) eines Schneckengetriebes treibt. Das Schneckenrad (12) des Schneckengetriebes bildet eine erste Kupplungshälfte, die frei drehbar gelagert ist und stirnseitig Aufnahmen für Mitnehmer (28) hat, welche zu einer zweiten Kupplungshälfte gehören. Die zweite Kupplungshälfte ist fest mit der Abtriebswelle (18) des Schneckengetriebes verbunden. Die Mitnehmer (28) springen in Achsrichtung der Abtriebswelle (18) aus der zweiten Kupplungshälfte vor. Innerhalb eines das Schneckengetriebe umgebenden Gehäuses (14) ist eine gestellfeste, zylindrische Wand (34) koaxial zur Drehachse des Schneckenrades (12) angeordnet, an der eine schraubenförmige Feder mit geringer Vorspannung anliegt. Die Enden des Federdrahts (42) sind radial von der Wand weggerichtet und bilden Ansätze, welche mit Schultern des Schneckenrades (12) bzw. mit Anschlägen der zweiten Kupplungshälfte (48) zusammenwirken. Die Schultern greifen jeweils auf den gegenüberliegenden Seiten an den Ansätzen (42) an wie die Anschläge. Kommt der Kraftfluß vom Schneckenrad, wird die Feder von der Wand gelöst und die Vorrichtung kann arbeiten. Wenn aber der Kraftfluß von der Abtriebswelle auf die zweite Kupplungshälfte gelangt, wird die Feder an der Wand angebremst, so daß ein Bewegen der Vorrichtung von dem zu verstellenden Teil aus nicht möglich ist.

R. 5185
17.11.1978 Sa/Sm

ROBERT BOSCH GMBH, 7000 Stuttgart 1

Antriebsvorrichtung zum Verstellen von Fensterscheiben,
Schiebedächern und dergleichen von Kraftfahrzeugen

Stand der Technik

Die Erfindung geht aus von einer Antriebsvorrichtung
nach der Gattung des Hauptanspruchs. Es ist schon eine
Antriebsvorrichtung bekannt, bei der man davon ausgegangen ist, daß ein Schneckengetriebe selbsthemmend sei
und deshalb von der Abtriebswelle aus nicht angetrieben
werden könne. Dies mag bei an ortsfesten Gestellen befestigten Schneckengetrieben richtig sein. Bei in Kraftfahrzeugen eingebauten Schneckengetrieben jedoch trifft
dies nicht zu, weil die andauernd auftretenden Erschütterungen und Stöße unter Begünstigung durch das stets vorhandene Flankenspiel zwischen Schneckenrad und Schneckenwelle zu einer Bewegung des Schneckengetriebes von der Abtriebsseite her führt. Dies ist besonders dort der Fall,
wo das zu verstellende Teil mit seinem Eigengewicht
diesen unerwünschten Vorgang noch unterstützt.

Vorteile der Erfindung

Die erfindungsgemäße Antriebsvorrichtung mit den kennzeichnenden Merkmalen des Hauptanspruchs hat demgegenüber den Vorteil, daß bei einem Kraftfluß von der Abtriebswelle her die Feder an der ihr zugeordneten Wand
verstärkt angelegt und festgebremst wird, so daß ein
unbeabsichtigtes Bewegen des zu verstellenden Teiles
ohne Betätigung der Antriebsvorrichtung ausgeschlossen
ist.

Durch die in den Unteransprüchen aufgeführten Maßnahmen
sind vorteilhafte Weiterbildungen und Verbesserungen der
im Hauptanspruch angegebenen Antriebsvorrichtung möglich.

Zeichnung

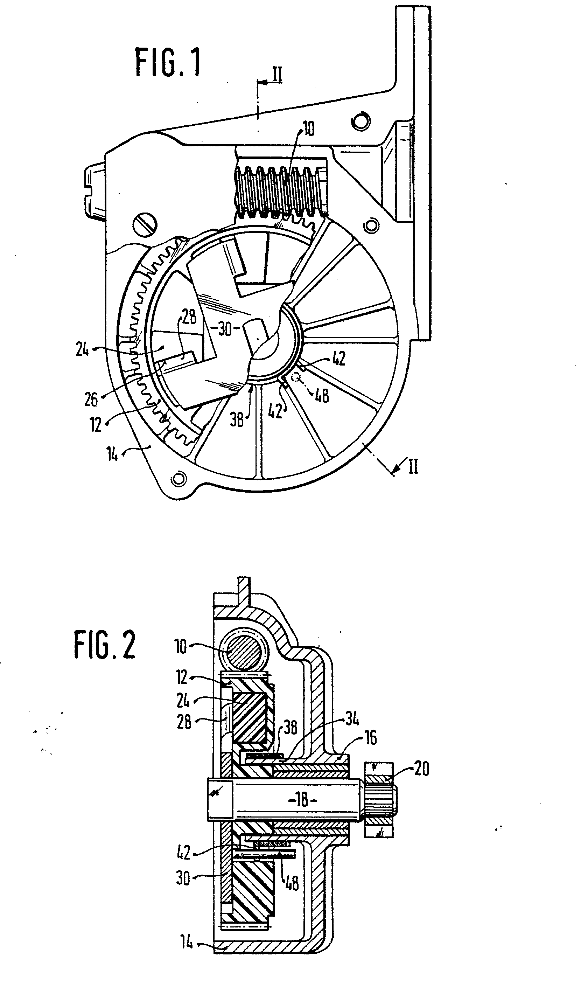

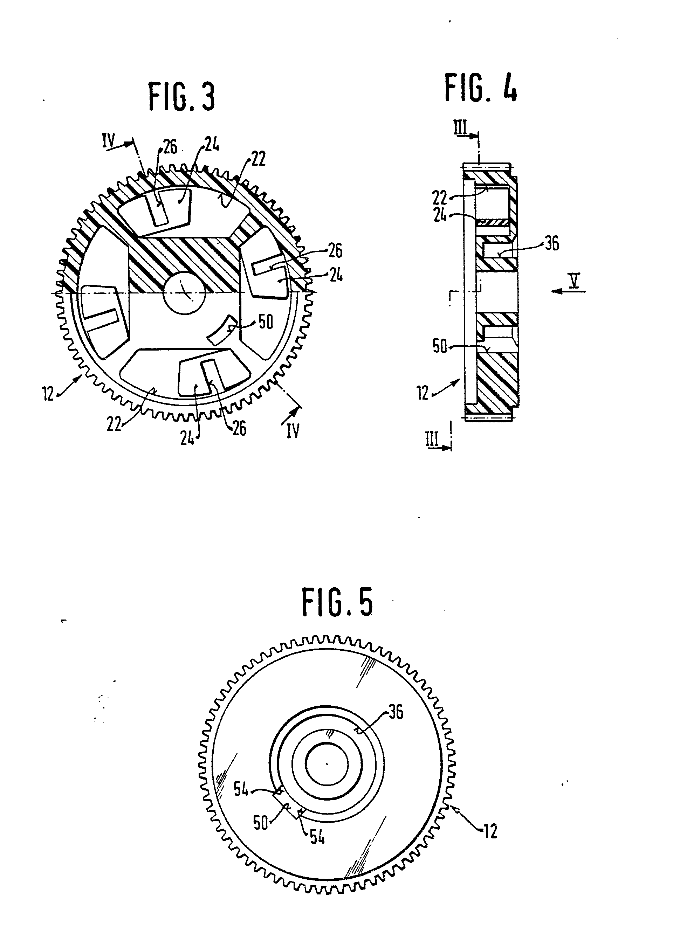

Ausführungsbeispiele der Erfindung sind in der Zeichnung
dargestellt und in der nachfolgenden Beschreibung näher
erläutert. Es zeigen Figur 1 eine Teildarstellung einer
Antriebsvorrichtung gemäß einer ersten Ausführung, bei
der eine im Bereich eines Schneckengetriebes angeordnete
Dämpfkupplung teilweise entfernt ist, Figur 2 einen
Schnitt entlang der Linie II-II in Figur 1, wobei die
Dämpfkupplung eingezeichnet ist, Figur 3 eine Draufsicht
auf das Schneckenrad des Schneckengetriebes gemäß Figur 1,
entlang der Linie III-III in Figur 4 teilweise geschnitten,
Figur 4 einen Schnitt durch das Schneckenrad entlang
der Linie IV-IV in Figur 3, Figur 5 eine Ansicht des
Schneckenrades in Richtung des Pfeiles V in Figur 4,
Figur 6 einen Schnitt durch eine zweite Kupplungshälfte

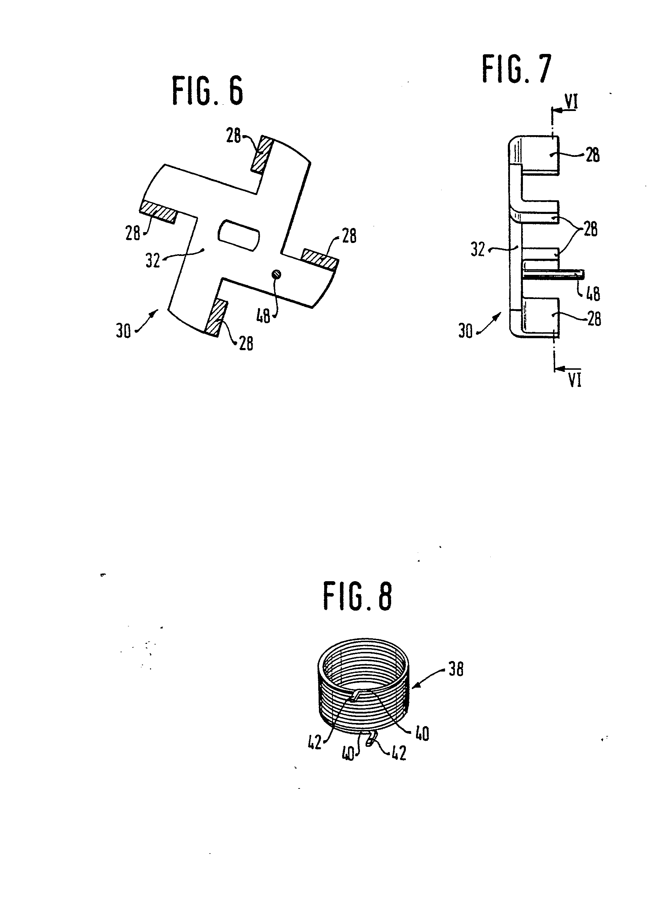

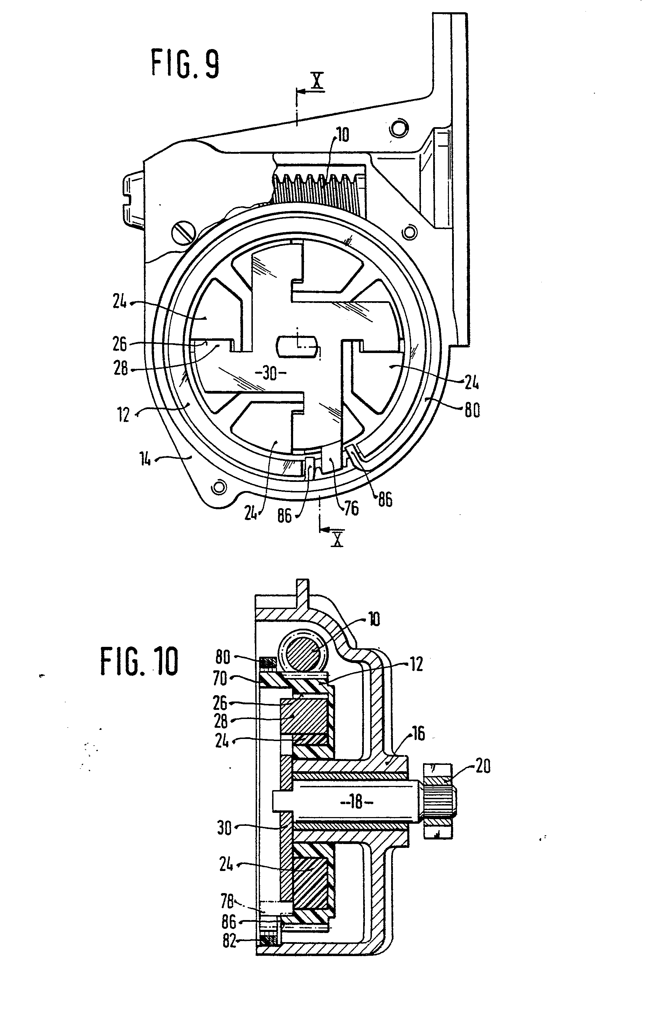

gemäß Figur 1, entlang der Linie VI-VI in Figur 7,
Figur 7 eine Seitenansicht der zweiten Kupplungshälfte
nach Figur 6, Figur 8 eine isometrische Darstellung der
Feder gemäß Figur 1, Figur 9 eine Teildarstellung einer
zweiten Auführung der Antriebsvorrichtung, bei der im
Bereich eines Schneckengetriebes ein Gehäusedeckel entfernt ist, Figur 10 einen Schnitt entlang der Linie X-X
in Figur 9, wobei der Schnittverlauf der Linie XI-XI in

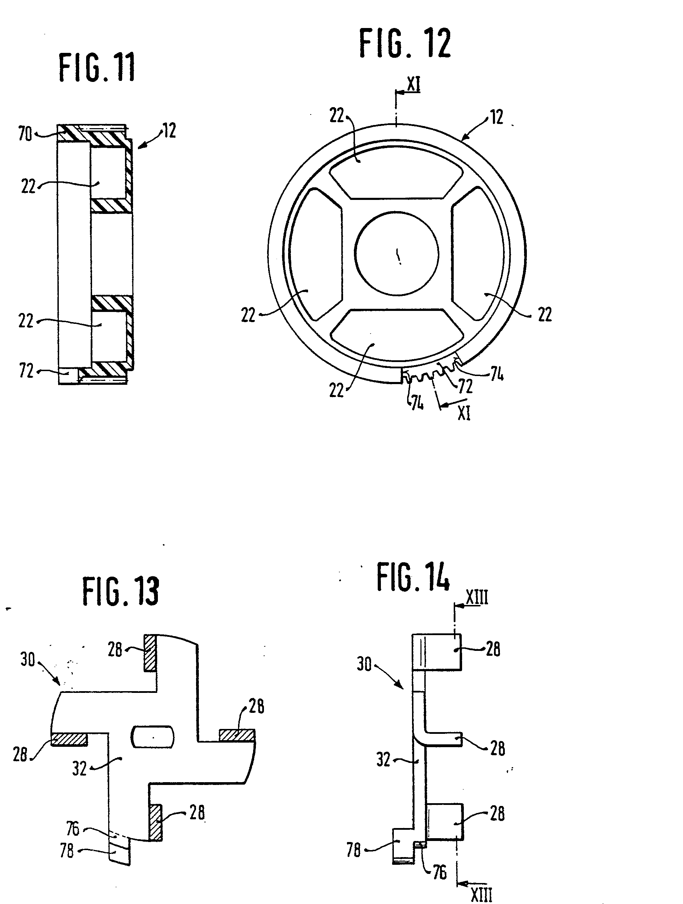

Figur 12 entspricht, Figur 11 einen Schnitt durch das
Schneckenrad aus dem Schneckengetriebe gemäß Figur 9,
entlang der Linie XI-XI in Figur 12, Figur 12 eine Draufsicht auf das Schneckenrad gemäß Figur 11, Figur 13 einen
Schnitt durch eine zweite Kupplungshälfte gemäß Figur 9,
entlang der Linie XIII-XIII in Figur 14, Figur 14 eine
Seitenansicht der zweiten Kupplungshälfte gemäß Figur 13,

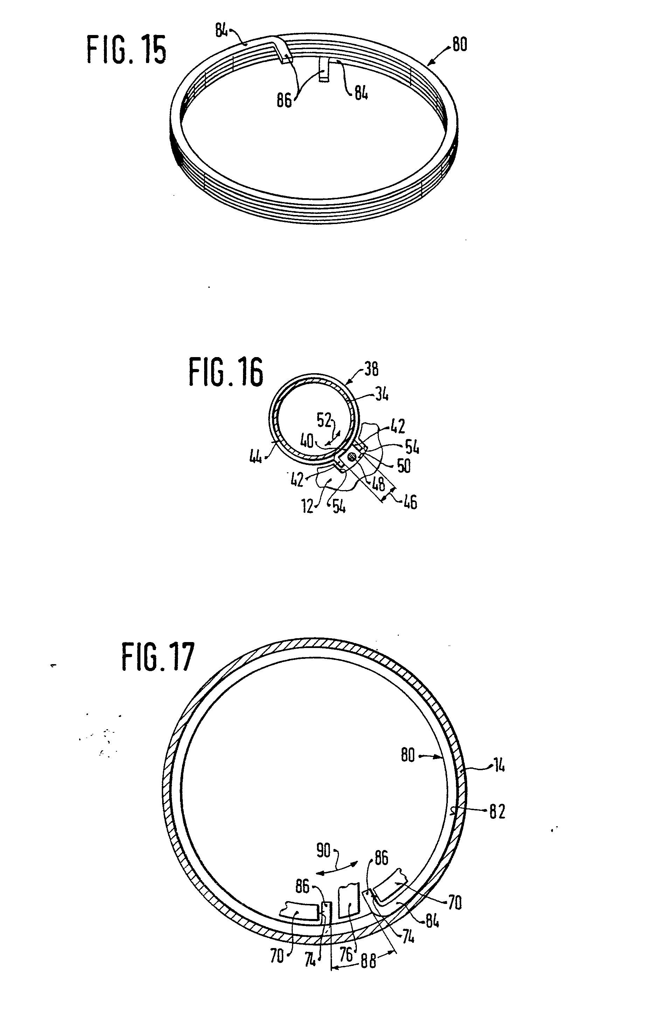

Figur 15 eine isometrische Darstellung der Feder gemäß
Figur 9, Figur 16 eine Prinzipdarstellung der ersten
Ausführung und Figur 17 eine Prinzipdarstellung der
zweiten Ausführung.

## Beschreibung der Erfindung

Bei der in den Figuren 1 bis 8 dargestellten Ausführung
einer Antriebsvorrichtung zum motorischen Heben und Senken
von Kraftfahrzeugfenstern ist einem nicht näher dargestellten elektrischen Antriebsmotor ein Schneckengetriebe nachgeordnet. Die Schneckenwelle des Schneckengetriebes wird
durch die Verlängerung 10 der Ankerwelle des Elektromotors gebildet. Die Schneckenwelle 10 kämmt mit einem
Schneckenrad 12. Das Schneckengetriebe 10, 12 ist in
einem Getriebegehäuse 14 untergebracht. Das Getriebegehäuse 14 weist ein Lagerauge 16 auf, in welchem eine
Abtriebswelle 18 geführt ist. An einem aus dem Getriebegehäuse 14 ragenden Ende der Abtriebswelle 18
ist ein Ritzel 20 befestigt, welches mit einem nicht dargestellten Übertragungsmechanismus zusammenarbeitet,
der die Abtriebsbewegung des Schneckengetriebes 10, 12
auf die zu verstellende Scheibe überträgt. Das andere
Ende der Abtriebswelle 18 ragt in das Getriebegehäuse 14.
Auf diesem Ende ist das Schneckenrad 12 frei drehbar gelagert. Um den Kraftfluß von dem Schneckenrad 12 auf die
Abtriebswelle 18 zu übertragen, ist eine Dämpfkupplung angeordnet, die ständig im Eingriff ist. Zweck der Kupplung ist es, die Stöße aufzufangen, die insbesondere
beim Einlaufen der Fensterscheibe in ihre Endstellung,
aber auch beim Losbrechen der Scheibe aus der Schließstellung nach längerer Betriebspause oder durch unvorhergesehene Hindernisse beim Bewegen der Scheibe auftreten. Die erste Kupplungshälfte wird durch das
Schneckenrad 12 selbst gebildet. In der einen Stirnfläche des Schneckenrades 12 /zu dieser sind offene Ausnehmungen 22 vorhanden (Figur 3), in welche elastische
Dämpfelemente 24 eingesetzt sind. Die Dämpfelemente 24
sind mit Aufnahmeschlitzen 26 ausgestattet, in welche
Mitnehmerlappen 28 einer zweiten Kupplungshälfte 30
eintauchen, welche durch ein kreuzförmiges Bauteil gebildet ist (Figuren 6 und 7). Die zweite Kupplungshälfte
30 ist fest mit dem Ende der Abtriebswelle 18 verbunden,
die dem Ritzel 20 gegenüberliegt (Figur 2). Die Mitnehmerlappen 28 sind parallel zur Achse der Abtriebswelle 18
aus einer Grundplatte 32 der Kupplungshälfte 30 herausgebogen und liegen in den Aufnahmeschlitzen 26 der
Dämpfglieder 24. Wenn also die Schneckenwelle 10 das
Schneckenrad 12 antreibt, wird über die Dämpfglieder 24
und die Mitnehmerlappen 28 die fest mit der Grundplatte
32 der zweiten Kupplungshälfte 30 verbundene Abtriebswelle 18 und damit das Ritzel 20 in eine Drehbewegung
versetzt. Das Lagerauge 16 hat einen in das Getriebegehäuse 14 ragenden Rohrstutzen 34, der in eine zum Lagerauge 16 hin offene Ringnut 36 in der anderen Stirnfläche des Schneckenrades eintaucht (Figuren 4 und 5).
Die Ringnut 36 ist in ihrem Außendurchmesser so bemessen,
daß auch eine auf den Rohrstutzen 34 aufgebrachte schraubenförmige Feder 38 in der Ringnut 36 liegt. Die in Figur 8
dargestellte, im Querschnitt rechteckige Feder 38 weist
mehrere Windungen auf, wobei sich die beiden Endbereiche
40 der letzten Windungen um ein bestimmtes Maß überdecken.
An jeden Endbereich 40 der Feder 38 ist ein im wesentlichen radialer Ansatz 42 angebogen. In dem in Figur 2
dargestellten Einbauzustand liegt die Feder 38 mit geringer Vorspannung an der äußeren Mantelfläche 44 des
Rohrstutzens 34 an und in Draufsicht gesehen liegen die
Ansätze 42 in einem Abstand 46 voneinander (Figur 16).
Mit der Grundplatte 32 der zweiten Kupplungshälfte 30 ist
ein Mitnehmerzapfen 48 verbunden, der sich mit Abstand
von der Achse der Abtriebswelle 18 parallel zu dieser
erstreckt. Der Mitnehmerzapfen 48 durchdringt das
Schneckenrad 12 in einem Durchbruch 50, der einen im
wesentlichen rechteckigen Querschnitt aufweist. Dabei
ist der Durchbruch 50 zur Drehachse des Schneckenrades
12 annähernd koaxial angeordnet. In Umfangsrichtung des
Schneckenrades 12 gesehen ist der Durchbruch 50 länger
als der Abstand 46, in welchem sich die beiden Ansätze
42 der Feder 38 voneinander befinden.

Beim Zusammenbau des Schneckengetriebes 10, 12 und der
Dämpfkupplung 22, 24, 28 muß darauf geachtet werden,
daß die beiden Ansätze 42 der Feder 38 in den zur Ringnut 36 hin offenen Durchbruch 50 ragen. Weiter muß darauf geachtet werden, daß der Mitnehmerzapfen 48 so
zwischen die beiden Ansätze 42 der Feder 38 gelangt,
wie dies in Figur 1 strichpunktiert angedeutet worden
ist.

R. 5185
Sa/Sm

Die Wirkungsweise der Antriebsvorrichtung nach den
Figuren 1 bis 8 soll anhand der Prinzipdarstellung gemäß Figur 16 erläutert werden. Wenn das Schneckenrad 12
in einer Richtung des Doppelpfeiles 52 angetrieben wird,
legt sich je nach Drehrichtung eine der beiden Schultern
54 des Durchbruchs 50 an einem der Ansätze 42 der Feder
38 an und dreht diese auf der Mantelfläche 42 des Rohrstutzens 34. Dabei wird die geringe Vorspannung der
Feder 38 auf dem Rohrstutzen 34 verringert, weil die
Schultern 54 entgegen der Wickelrichtung der Feder 38
an den Ansätzen 42 zur Anlage kommen. Wenn jedoch eine
Drehbewegung von dem Ritzel 20 aus auf das Schneckengetriebe 10, 12 zur Wirkung kommt, wird über den mit
der zweiten Kupplungshälfte 30 fest verbundenen Mitnehmerzapfen 48 diese Drehbewegung auf die Ansätze 42
der Feder 38 übertragen. Je nach Drehrichtung legt sich
dabei der Mitnehmerzapfen 48 an einen den beiden Ansätze
42 der Feder 38 an. Der Mitnehmerzapfen 48 bzw. dessen
den Ansätzen 42 zugewandten Mantelbereiche bilden also
Anschläge für die Ansätze 42 der Feder 38. In diesem
Falle jedoch wird die Feder 38 in Wickelrichtung beaufschlagt, wobei sich die Windungen der relativ weichen
Feder fest an der äußeren Mantelfläche 44 des Rohrstutzens
34 anlegen und eine Drehbewegung verhindern. Dabei nimmt
die Bremswirkung der Feder 38 in dem gleichen Maße zu,
wie die Größe der Drehkraft. Damit diese Bremswirkung
zustandekommen kann, ist es erforderlich, daß die Mitnehmerlappen 28 der zweiten Kupplungshälfte in Drehrichtung der Schneckenwelle 10 gesehen mit einem bestimmten
Spiel in den Aufnahmeschlitzen 26 der Dämpfglieder 24
angeordnet sind.

Bei der anderen, mit den Figuren 9 bis 15 dargestellten
Ausführung sind alle Bauteile, welche mit denen der ersten Ausführung übereinstimmen, mit gleichen Bezugszahlen versehen. So weist auch diese Ausführung eine
Schneckenwelle 10 und ein Schneckenrad 12 auf, wobei
das Schneckenrad 12 ebenfalls mit Ausnehmungen 22 versehen ist, in welchem Dämpfelemente 24 liegen. Weiter
sind die Dämpfelemente 24 mit Aufnahmeschlitzen 26 versehen, in welche Mitnehmerlappen 28 einer zweiten Kupplungshälfte 30 greifen, die fest mit einer Abtriebswelle
18 verbunden ist. Auch bei dieser Ausführung ist das
Schneckengetriebe 10, 12 mit einem Getriebegehäuse 14 umgeben, das ein Lagerauge 16 aufweist, in welchem eine Abtriebswelle 18 gelagert ist. Weiter ist bei dieser Ausführung das Schneckenrad 12 ebenfalls frei drehbar auf
der Abtriebswelle 18 angeordnet. Es ist aber auch denkbar, das Schneckenrad 12 auf einem in das Getriebegehäuse
14 vorspringenden Ringbund des Lagerauges 16 drehbar zu
lagern. Abweichend von der Ausführung gemäß den Figurn 1
bis 8 weist das Schneckenrad 12 auf seiner von dem Ritzel
20 abgewandten Stirnfläche einen Ringansatz 70 auf (Figuren 10 und 11), der mit einer Unterbrechung 72 versehen
ist. Durch diese Unterbrechung 72 werden zwei Schultern
74 gebildet. Die zweite Kupplungshälfte 30 weist einen
im wesentlichen radial gerichteten Finger 76 auf, der mit einer
Verstärkung  78 versehen ist. In eingebautem Zustand
greift der Finger 76 der zweiten Kupplungshälfte 30
zwischen die durch die Unterbrechung 72 gebildeten Schultern 74 des Ringansatzes  70 (Figuren 9 und 17). Auch die
Ausführung gemäß den Figuren 9 bis 15 weist eine schraubenförmig gewundene Feder 80 auf, die mit ihrem äußeren Umfang mit geringer Vorspannung an einem das Schneckenrad
12 umgebenden Wandbereich 82 des Getriebegehäuses 14 anliegt. Die im Querschnitt rechteckige Feder 80 besteht
aus mehreren schraubenförmig angeordneten Windungen und an die Endbereiche 84 der jeweils letzten Windungen sind
etwa radial nach innen gerichtete Ansätze 86 angebogen.
Die Anordnung der Ansätze 86 ist so getroffen, daß die
beiden äußersten Windungen in Draufsicht gesehen mit
Abstand voneinander enden, so daß die beiden Ansätze 86
in einem Abstand 88 voneinanderliegen (Figur 17). Wie insbesondere die Figuren 9 und 17 zeigen, ragen die beiden
Ansätze 86 der Feder 80 in die Unterbrechung 72 des Ringansatzes 70 und der Finger 76 der zweiten Kupplungshälfte 30 zwischen die beiden Ansätze 86 der Feder 80.
Die      Verstärkung   78 des Fingers 76  ist in
ihrer Dicke so bemessen, daß sie mit den Ansätzen 86
zusammenwirken kann.

Die Wirkungsweise der Vorrichtung nach den Figuren 9
bis 15 soll anhand der Prinzipdarstellung gemäß Figur 17
erläutert werden. Wenn das Schneckengetriebe 10, 12 von
der Schneckenwelle 10 aus bewegt wird, läuft das
Schneckenrad 12 je nach Drehrichtung in einer Richtung
des Doppelpfeils 90 um. Dabei schlägt eine der Schultern
74 an einem der Ansätze 86 der Feder 80 an, wobei die
Vorspannung der Feder 80 zur Wand 82 verringert wird, so
daß die Feder 80 zusammen mit dem Schneckenrad 12 verdreht wird. Wird jedoch das Schneckengetriebe von der
Abtriebswelle 18 aus bewegt, dreht sich die zweite Kupplungshälfte 30 und mit dieser der Finger 76, der dann
je nach Drehrichtung an einem der Ansätze 86 der Feder
80 zur Anlage kommt. Der Finger 76 bildet also zusammen
mit seiner Verstärkung   78 Anschläge für die Ansätze 86
der Feder 80. In diesem Fall wird aber die Vorspannkraft
der Feder 80 verstärkt und ein Drehen der Abtriebswelle
sicher verhindert. Damit diese Wirkung eintreten kann,
ist es auch bei dieser Ausführung erforderlich, daß die
Mitnehmerlappen 28 der zweiten Kupplungshälfte 30 in

0012250

Umfangsrichtung gesehen so viel Spiel in den Aufnahmeschlitzen 26 der Dämpfelemente 24 haben, daß die erwünschte Bremswirkung eintreten kann.

Den beiden Ausführungsbeispielen ist gemeinsam, daß
innerhalb eines das Schneckengetriebe 10, 12 umgebendes
Gehäuses 14 eine an einer gestellfesten, zylindrischen
Wand 44 bzw. 82 mit geringer Vorspannung anliegende,
schraubenförmige Feder (Schlingfeder) 38 bzw. (Spreizfeder) 80 angeordnet ist, welche an jedem Drahtende 40
bzw. 84 einen im wesentlichen radialen Ansatz 42 bzw. 86
hat, daß die erste Kupplungshälfte 12 Schultern 54 bzw.
74 aufweist welche beim Antrieb des Schneckenrads 12
durch die Schneckenwelle 10 die Feder 38 bzw. 80 je nach
Drehrichtung über einen der Ansätze 42 bzw. 86 von der
Wand 44 bzw. 82 löst, daß die zweite Kupplungshälfte 30
Anschläge 48 bzw. 76 hat, welche beim Antrieb des Schneckenrads 12 von der Abtriebswelle 18 aus die Feder 38 bzw. 80
an der Wand 44 bzw. 82 festbremst und daß die Schultern
54 bzw. 74 der ersten Kupplungshälfte 12 in Drehrichtung
des Schneckenrades 12 gesehen, jeweils auf den gegenüberliegenden Seiten der Ansätze 42 bzw. 86 anschlagen wie
die Anschläge 48 bzw. 76 der zweiten Kupplungshälfte 30.

Abweichend von dem hier beschriebenen Ausführungsbeispiel ist es aber auch denkbar, eine der Bremseinrichtungen bei einem dem Antriebsmotor nachgeordneten Stirnradgetriebe anzuwenden.

R. 5185

17.11.1978 Sa/Sm

ROBERT BOSCH GMBH, 7000 Stuttgart 1

Antriebsvorrichtung zum Verstellen von Fensterscheiben, Schiebedächern und dergleichen von Kraftfahrzeugen

Ansprüche

1. Antriebsvorrichtung zum Verstellen von Fensterscheiben, Schiebedächern und dergleichen von Kraftfahrzeugen, mit einem vorzugsweise elektrischen Antriebsmotor, dessen Welle ein Getriebeelement, vorzugsweise eine Schneckenwelle trägt, welche mit einem zweiten Getriebeelement, vorzugsweise einem Schneckenrad kämmt, das frei drehbar gelagert und mit stirnseitig offenen Ausnehmungen zur Aufnahme von elastischen Dämpfelementen versehen ist, in welchen Mitnehmer der anderen, mit einer Abtriebswelle fest verbundenen Kupplungshälfte gelagert sind, wobei die Mitnehmer in Achsrichtung der Abtriebswelle aus der zweiten Kupplungshälfte vorspringen, dadurch gekennzeichnet, daß vorzugsweise innerhalb eines das Schneckengetriebe (10, 12) umgebenden Gehäuses (14) eine an einer gestellfesten, zylindrischen Wand (44 bzw. 82) mit geringer Vorspannung anliegende, schraubenförmige Feder (38 bzw. 80) angeordnet ist, welche an jedem Drahtende (40 bzw. 84) einen im wesentlichen radialen Ansatz (42 bzw. 86) hat, daß die erste Kupplungshälfte (12) Schultern (54 bzw. 74) aufweist, welche beim Antrieb des Schneckenrades (12) durch die Schneckenwelle (10) die Feder (38 bzw. 80) je nach Drehrichtung über einen der Ansätze (42 bzw. 86) von der Wand (44 bzw. 82) löst, daß die zweite Kupplungshälfte (30) Anschläge (48 bzw. 76) hat, welche beim Antrieb des Schneckenrades (12) von der Abtriebswelle (18) aus die Feder (38 bzw. 80) an der Wand (44 bzw. 82) festbremst und daß die Schultern (54 bzw. 74) der ersten Kupplungshälfte (12) in Drehrichtung des Schneckenrades (12) gesehen jeweils auf den gegenüberliegenden Seiten der Ansätze (42 bzw. 86) anschlagen, wie die Anschläge (48 bzw. 76) der zweiten Kupplungshälfte (30).

2. Antriebsvorrichtung nach Anspruch 1, dadurch gekennzeichnet, daß die Wand durch die äußere Mantelfläche (44) eines koaxial zur Abtriebswelle (18) in das Gehäuse (14) ragenden Rohrstutzens (34) gebildet ist und daß die beiden radialen Ansätze (42) in Draufsicht mit
Abstand voneinander angeordnet sind, wobei sich die
beiden Endbereiche (40) der jeweils letzten Schraubenwindungen überdecken.

3. Antriebsvorrichtung nach Anspruch 2, dadurch gekennzeichnet, daß dem Rohrstutzen (34) eine zur einen Stirnfläche randoffene Ringnut (36) in dem Schneckenrad (12)
zugeordnet ist.

4. Antriebsvorrichtung nach einem der Ansprüche 1 bis 3,
dadurch gekennzeichnet, daß die Schultern der ersten
Kupplungshälfte (12) durch die in Umfangsrichtung
liegenden Wände (54) eines in Achsrichtung laufenden
Durchbruchs (50) in dem Schneckenrad (12) gebildet sind.

5. Antriebsvorrichtung nach Anspruch 4, dadurch gekennzeichnet, daß die Anschläge der zweiten Kupplungshälfte
(30) durch Wandbereiche eines sich in Achsrichtung durch
den Durchbruch (50) erstreckenden, mit der zweiten Kupplungshälfte (30) fest verbundenen Zapfens (48) gebildet
sind, der zwischen den einander zugewandten Seiten der
Ansätze (42) der Feder (38) angeordnet ist.

6. Antriebsvorrichtung nach Anspruch 1, dadurch gekennzeichnet, daß die Wand durch einen inneren, das Schneckenrad (12) koaxial umgebenden Wandbereich (82) eines Gehäuseteils (14) gebildet ist und daß die beiden radialen, in Richtung zur Achse weisenden Ansätze (86) der Feder (80) in Draufsicht mit Abstand voneiannder angeordnet sind, wobei die beiden Endbereiche (84) der letzten Schraubenwindungen mit Abstand voneinander enden.

7. Antriebsvorrichtung nach Anspruch 6, dadurch gekennzeichnet, daß die Schultern der ersten Kupplungshälfte (12) durch die Endkanten (74) eines sich in Achsrichtung des Schneckenrades (12) erstreckenden, an diesem angeordneten und mit einer Unterbrechung (72) versehenen Ringansatzes (70) gebildet sind.

8. Antriebsvorrichtung nach Anspruch 7, dadurch gekennzeichnut, daß zwischen den beiden mit Abstand voneinander angeordneten Schultern (74) der ersten Kupplungshälfte (12) die beiden Ansätze (86) der Feder liegen.

9. Antriebsvorrichtung nach einem der Ansprüche 6 bis 8, dadurch gekennzeichnet, daß die Anschläge der zweiten Kupplungshälfte (30) durch die den Ansätzen (86) zugewandten

R. 5185
Sa/Sm

0012250

Kanten eines mit der zweiten Kupplungshälfte (30) verbundenen, radial gerichteten Fingers (76) gebildet sind,
der sich zwischen die beiden Ansätze (86) der Feder (80)
erstreckt.

Ja

# FIG.1

# FIG.2

**FIG. 3**

**FIG. 4**

**FIG. 5**

# FIG. 6

28
28
28
32
30
48
28

# FIG. 7

VI
28
28
32
48
30
28
VI

# FIG. 8

38
40
42
40
42
40

FIG. 9

FIG. 10

## FIG.11

## FIG. 12

## FIG.13

## FIG.14

5185

FIG. 15

84 · 80

86 · 84

FIG.16

38
34
52
40 · 42
44 · 54
50
42 · 48
12 · 54 · 46

FIG.17

80 · 14

82

90 · 86
86
70
84
70 · 74 · 76 · 88 · 74

Europäisches Patentamt

**EUROPÄISCHER RECHERCHENBERICHT**

0012250

Nummer der Anmeldung

EP 79 10 4624

## EINSCHLÄGIGE DOKUMENTE

| Kategorie | Kennzeichnung des Dokuments mit Angabe. soweit erforderlich, der maßgeblichen Teile | betrifft Anspruch |
|---|---|---|
| X | US - A - 3 930 566 (TAKEO MATSUSHIMA) <br> ✱ Seite 1, Zusammenfassung; Spalte 1, Zeilen 50-68; Spalte 2, Zeilen 1-68; Spalte 3, Zeilen 1-40; Abbildungen 2-5 ✱ | 1,2,4, 5,6,8, 9 |

**KLASSIFIKATION DER ANMELDUNG (Int.Cl.)**

E 05 F 11/50
15/16

**RECHERCHIERTE SACHGEBIETE (Int. Cl. 3)**

E 05 F

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie. übereinstimmendes Dokument

Der vorliegende Recherchenbericht wurde fur alle Patentansprüche erstellt.

| Recherchenort | Abschlußdatum der Recherche | Prufer |
|---|---|---|
| Den Haag | 07-03-1980 | NEYS |

EPA form 1503.1  06.78